Europäisches Patentamt

European Patent Office

Office européen des brevets

(19)

(11) Publication number: **0 089 086**
**A2**

# (12) EUROPEAN PATENT APPLICATION

(21) Application number: **83200341.2**

(22) Date of filing: **10.03.83**

(51) Int. Cl.³: **C 08 F 2/22**
**C 08 F 291/02**

(30) Priority: **11.03.82 US 357017**

(43) Date of publication of application:
**21.09.83 Bulletin 83/38**

(84) Designated Contracting States:
**BE DE FR GB IT NL SE**

(71) Applicant: **STAUFFER CHEMICAL COMPANY**

**Westport Connecticut 06880(US)**

(72) Inventor: **Hornibrook, Walter John**
**31 Weather Oak Hill**
**Newburgh, NY 12550(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) Process for forming emulsion/emulsion polymers.

(57) Polymer coagulum formation during emulsion/emulsion polymerization procedures for forming polymeric material containing rubbery and relatively more rigid polymer components is reduced by conducting the polymerization of the rubbery component in two stages. The initial stage involves polymerization of only a portion of the monomer charge in a reaction medium containing adequate surfactant so that the resulting polymer particles do not coalesce. The second stage of the polymerization involves addition of the remaining monomer without the addition of additional surfactant to complete polymerization of the rubbery polymer product.

EP 0 089 086 A2

Croydon Printing Company Ltd.

## PROCESS FOR FORMING
## EMULSION/EMULSION POLYMERS

### Background of the Invention

The present invention relates to an improvement in multistep emulsion/emulsion polymerization techniques for forming polymeric materials.

### Description of the Prior Art

It is known in the prior art to form polymeric materials using an initial emulsion polymerization reaction to form a rubbery polymeric material followed by a subsequent emulsion polymerization reaction in which the previously formed polymer is a reaction ingredient along with one or more monomers which form a relatively more rigid polymeric material. For example, in U.S. Patent No. 3,944,631 to A. J. Yu et al., it is proposed to first form a crosslinked acrylate polymer product and use it as a reaction ingredient in a later emulsion polymerization reaction also containing styrene, acrylonitrile, and crosslinking monomer.

Recently, it has been proposed in pending U.S. Serial No. 282,630, filed July 13, 1981 that undesired polymer flocculation in such an emulsion/emulsion polymerization process can be reduced by dispersing the monomeric reactants in the initial emulsion polymerization portion of the reaction by use of homogenization.

C-6240

## Summary of the Present Invention

The present invention is a multistep emulsion/ emulsion polymerization process in which the emulsion polymerization of the monomers adapted to form the rubbery polymer is conducted in two stages wherein the initial stage is carried out using a portion of the monomer charge with adequate surfactant protection so that the resulting particles do not coalesce and the following stage utilizes the remainder of the monomer charge without the addition of additional surfactant.

## Description of Preferred Embodiments of the Present Invention

The terminology "emulsion/emulsion polymerization" as used herein is intended to refer to those aqueous, multistep processes wherein an emulsion polymerization reaction is employed to form a polymer latex and either the latex, or the rubbery polymer product contained therein, is used as an ingredient in a later emulsion polymerization reaction along with additional monomer which forms a relatively more rigid polymer.

One class of such emulsion/emulsion polymerization reactions involves the initial polymerization of monomers adapted to form a rubbery acrylate polymer product which is used as a reaction ingredient in a later emulsion polymerization reaction along with a monomer charge adapted to form a relatively more rigid polymer. For example, in U.S. Patent No. 3,944,631 to A. J. Yu an initial emulsion polymerization reaction is conducted comprising acrylate monomers capable of forming rubbery crosslinked polymers having a $T_g$ of less than 25°C. and a second emulsion polymerization procedure is then carried out in which styrene, acrylonitrile, and crosslinking monomer are polymerized in the presence of the previously formed crosslinked rubbery polymer. The resulting crosslinked acrylate/crosslinked styrene-acrylonitrile interpolymer is used as a reaction ingredient during a later polymerization of styrene and acrylonitrile in the absence of crosslinker.

In the above type of conventional process, the acrylate polymerization is customarily practiced using a reaction medium comprising an aqueous emulsion containing: from about 10% to about 50%, by weight, of a $C_2$-$C_{10}$ alkyl acrylate, $C_8$-$C_{22}$ alkyl methacrylate, or mixtures thereof; from about 0.2% to 2.0% by weight, of a suitable emulsifier; from about 0.05% to 5%, by weight, of a polyethylenically unsaturated crosslinking agent; and from about 0.2% to about 2.0%, by weight of the monomer, of a water soluble free radical or redox initiator. The polymerization is carried out at 40°-95°C. for 0.5 to 8 hours.

The next step is the emulsion polymerization of styrene and acrylonitrile (e.g., in a 50/50 to 85/15 weight ratio) in the presence of the crosslinked acrylic rubber from the prior stage and in the presence of the types and amounts of crosslinking agent, emulsifier, and initiator previously described.

C-6240

The present invention involves carrying out the polymerization of monomer (or monomers) adapted to form the rubbery component in two stages under certain specified conditions rather than in a single stage. In the initial stage, only a portion of the monomer charge (e.g., only a minor amount, for example, less than 20-25%) is polymerized in the presence of adequate surfactant protection so that the resulting particles do not coalesce. The following stage utilizes the remainder of the monomer without the addition of additional surfactant.

In the process of the present invention, the initial stage polymerization of monomer adapted to form rubbery polymer is, therefore, conducted at a higher water to monomer weight ratio than conventionally used in a single step polymerization. For example, the water/monomer weight ratio can vary from about 10 to 50 as compared to a conventional value of about 5. In this initial stage, the monomer/surfactant ratio can range from 50 to about 100 to insure non-coalescence of the particles, as compared to a conventional value of about 50, and the monomer/initiator weight ratio from about 150 to about 300 (which is substantially the same as in the case of a conventional polymerization).

The water/monomer weight ratio during the second stage of the polymerization of rubbery monomer can range from about 4 to about 6, the monomer to surfactant weight ratio can be from about 250 to about 500, and the monomer to initiator weight ratio can be from about 250 to 450.

C-6240

The product from the aforementioned two stage polymerization procedure for forming the rubbery polymer is then used in the later emulsion polymerization of the relatively more rigid polymer, e.g., styrene-acrylonitrile, such that the level of coagulum formed in the emulsion/emulsion polymerization prodecure for forming the rubbery/rigid interpolymer is reduced.

The present invention is illustrated by the Examples which follow.

COMPARATIVE EXAMPLE 1

This Example illustrates the results that were obtained when all the acrylic monomer was reacted in a single step in the formation of a crosslinked poly(butyl acrylate) -crosslinked poly(styrene-acrylonitrile) interpolymer.

With the reactor agitator at 200 rpm., the following ingredients were added to the reactor:

| Ingredient | Amount |
|---|---|
| Butyl acrylate monomer | 5.046 kg. |
| Butylene glycol diacrylate crosslinker | 12.8 gm. |
| Stearyl alcohol | 70 gm. |
| Sodium bisulfite initiator | 6 gm. |
| Sodium lauryl sulfate emulsifier solution (SIPEX UB brand) -30 wt.% in water- | 23.5 gm. |
| Disodium monodecyl sulfo-succinate emulsifier solution (AEROSOL A-268 brand) -50 wt. % in water- | 60.5 gm. |
| Deionized water | 7.57 liters |

Vacuum was then applied to the reaction medium, and the mixture was homogenized for about 2-1/2 minutes through a TEKMAR homogenization apparatus. Then 17.03 liters of deionized water were added to flush out the homogenizer. The reactor was purged of air using nitrogen and the reactor pressure was built up to 0.703 kg/cm$^2$ (gauge) with nitrogen,

C-6240

and the contents were heated to 54.4°C. at which temperature 10 gm. of ammonium persulfate initiator in 100 ml. of deionized water was added. The batch temperature was held at 54.4°C. by cooling the reactor jacket until one hour after the jacket temperature had risen to 54.4°C. At that point, the following ingredients were added:

COMPARATIVE EXAMPLE 1 (cont'd.)

| Ingredient | Amount |
|---|---|
| Styrene monomer | 1.247 kg. |
| Acrylonitrile monomer | 0.453 kg. |
| Divinyl benzene crosslinker | 17.8 gm. |
| Deionized water | 1.361 kg. |

The batch temperature was maintained at 54.4°C. Two hours after the jacket temperature again rose to 54.4°C., the reactor was allowed to cool. It was vented and the resulting product (31.326 kg. of latex containing 6.171 kg. of polymer) was recovered. The interior surfaces of the reactor showed a light to medium, hazy buildup of polymer on its internal surfaces. The amount of undesired polymer flocculation was 396.89 gm.

C-6240

## COMPARATIVE EXAMPLE 2

This Example utilizes the same procedure shown in the preceding Example to form the same type of product.

A light rubberish build-up between the liquid level was noted on the internal surfaces of the reactor. The weight of the product was 28.716 kg. of latex containing 5.657 kg. of resin. The amount of polymer flocculation generated was about 652.04 gm.

C-6240

## COMPARATIVE EXAMPLE 3

This Example utilizes the same procedure shown in the two preceding Examples to form the same type of product, with the following exceptions:

In the acrylate polymerization step, the amount of stearyl alcohol was 85 gm., rather than 70 gm., the sodium bisulfite was present at 2 gm., rather than 6 gm., the sodium lauryl sulfate emulsifier solution (30 wt. % active) was present at 30 gm., rather than 23.5 gm., and the amount of disodium monodecyl sulfosuccinate emulsifier solution (50 wt. % in water) was present at 65 gm., rather than 60.5 gm.

The yield of product was 28.545 kg. of latex containing 5.966 kg. of resin, and the amount of polymer flocculant was about 595.34 gm.

C-6240

## EXAMPLE 4

This illustrates the process of the present invention.

With agitation at about 200 rpm., 32.93 liters of deionized water and the following ingredients were charged to the reactor:

| Ingredient | Amount |
|---|---|
| Sodium bisulfite initiator | 2.4 gm. |
| Sodium lauryl sulfate, emulsifier solution (30 wt.% active) | 10.4 gm. |
| Disodium monodecyl sulfosuccinate emulsifier solution (50 wt.% active) | 24.4 gm. |

After addition of the foregoing, the following were added:

| Ingredient | Amount |
|---|---|
| Butyl acrylate monomer | 1.27 kg. |
| Butylene glycol diacrylate crosslinker | 3.5 gm. |

The reactor was evacuated and filled with nitrogen, reactor pressure was built up to 0.703 kg/cm² (gauge), and the reactor was heated to 54.4°C. At this point 2.4 gms. of ammonium persulfate in 100 ml. of deionized water was added. The batch temperature was held at 54.4°C. by cooling the reactor jacket.

C-6240

One hour after the jacket temperature rose to 54.4°C., the following ingredients were added:

EXAMPLE 4 (cont'd.)

| Ingredient | Amount |
| --- | --- |
| Deionized water | 1.63 kg. |
| Butyl acrylate monomer | 5.44 kg. |
| Butylene glycol diacrylate crosslinker | 13.7 gm. |

Then 12 gms. of ammonium persulfate in 100 ml. of deionized water was added followed by 2.4 gm. of potassium persulfate. The batch temperature was maintained at 54.4°C. by cooling the reaction jacket. The following were added one hour after the jacket temperature rose to 54.4°C.:

| Ingredient | Amount |
| --- | --- |
| Styrene monomer | 1.68 kg. |
| Acrylonitrile monomer | 0.590 kg. |
| Divinyl benzene crosslinker | 24.3 gm. |
| Deionized water | 1.63 kg. |

The polymerization temperature was maintained at 54.4°C. by cooling the reactor jacket. Two hours after the jacket temperature rose to 54.4°C., 1.8 gm. of ascorbic acid in 100 ml. of deionized water was added. The reaction mixture was mixed for one-half hour more, cooled, the reactor was vented, and the product recovered (44.719 kg. of latex containing 8.407 kg. of resin). The amount of undesired polymer flocculant was only about 1.5 gm.

C-6240

EXAMPLE 5

This illustrates another embodiment of the process for the present invention.

With agitation at about 200 rpm., 27.63 kg. of deionized water and the following ingredients were charged to the reactor:

| Ingredient | Amount |
|---|---|
| Sodium bisulfite initiator | 2.0 gm. |
| Sodium lauryl sulfate emulsifier solution | 10.2 gm. |
| Disodium monodecyl sulfosuccinate emulsifier solution | 21.4 gm. |

After addition of the foregoing, the following were added:

| Ingredient | Amount |
|---|---|
| Butyl acrylate monomer | 1.049 kg. |
| Bulylene glycol diacrylate crosslinker | 2.9 gm. |

The reactor was evacuated and filled with nitrogen, reactor pressure was built up to 0.703 kg/cm$^2$ (gauge), and the polymerization temperature was maintained at 54.4°C. by cooling the reactor jacket. At this point 2.0 gm. of ammonium persulfate in 100 ml. of deionized water was added.

One hour after the jacket temperature rose to 54.4°C., the following ingredients were added:

EXAMPLE 5 (cont'd.)

| Ingredient | Amount |
| --- | --- |
| Deionized Water | 1.36 kg. |
| Butyl acrylate monomer | 4.54 kg. |
| Butylene glycol diacrylate crosslinker | 11.5 gm. |

Then 10 gm. of ammonium persulfate in 100 ml. of deionized water was added followed by 2.0 gm. of potassium persulfate. The batch temperature was maintained at 54.4°C. by cooling the jacket. The following ingredients were added after the jacket temperature rose to 54.4°C.:

| Ingredient | Amount |
| --- | --- |
| Styrene monomer | 1.42 kg. |
| Acrylonitrile monomer | 0.51 kg. |
| Divinyl benzene crosslinker | 20.0 gm. |
| Deionized water | 1.36 kg. |

Two hours after the jacket temperature reached 54.4°C. subsequent to cooling, 1.3 gm. of ascorbic acid in 100 ml. of deionized water was added. The reaction mixture was mixed for one-half hour more, cooled, the reactor was vented, and the product recovered (37.598 kg. of latex containing 7.256 kg. of resin).

The amount of polymer flocculation was less than 28.35 gm. A light, hazy buildup of polymer was noted on the internal surfaces of the reactor.

C-6240

### EXAMPLE 6

This illustrates yet another embodiment of the process of the present invention.  The process described in Example 4 was repeated.  The product was 45.718 kg. of latex containing 8.549 kg. of resin.

The amount of polymer flocculant was less than about 28.35 gm.  A light, speckled buildup of polymer was noted on the inner surfaces of the reactor.

The foregoing Examples merely illustrate certain preferred embodiments of the invention. The scope of protection that is sought is set forth in the claims which follow.

C-6240

## C L A I M S

1. In an aqueous emulsion/emulsion polymerization reaction for forming polymeric materials comprising an initial emulsion polymerization of monomer to form a rubbery polymer and a later emulsion polymerization reaction, in the presence of the rubbery polymer, for forming a polymeric material containing the rubbery polymer and a relatively more rigid polymer, wherein the improvement comprises conducting the emulsion polymerization of monomer adapted to form the rubbery polymer in two stages, wherein the initial stage is carried out using a portion of the monomer and an effective amount of surfactant to prevent coalescence of the resulting polymer particles and the following stage utilizes the remainder of the monomer without the addition of additional surfactant to result in a lower level of polymer coagulation during the emulsion/emulsion polymerization reaction.

2. A process as claimed in Claim 1 wherein the water/monomer weight ratio in the initial stage ranges from about 10 to about 50.

3. A process as claimed in either Claim 1 or 2 wherein the rubbery polymer has a $T_g$ of less than about 25°C.

4. A process as claimed in either Claim 1 or 2 wherein the rubbery polymer is crosslinked.

5. A process as claimed in either Claim 1 or 2 wherein the rubbery polymer is selected from the group consisting of crosslinked acrylate, crosslinked methacrylate, or mixtures thereof.

C-6240

6.  A process as claimed in Claim 1 or 2
wherein the relatively more rigid polymer is styrene-
acrylonitrile.

7.  A process as claimed in Claim 1 or 2
wherein the relatively more rigid polymer is crosslinked styrene-acrylonitrile and the rubbery polymer
is crosslinked acrylate.

8.  A process as claimed in Claim 1 or 2 wherein the portion of monomer used in the initial stage
is a minor amount of the monomer charge.

C-6240